# EUROPEAN PATENT SPECIFICATION

(11) **EP 2 557 678 B1**
(45) Date of publication and mention of the grant of the patent: **07.05.2014**
(21) Application number: 11176942.8
(22) Date of filing: 09.08.2011
(51) Int. Cl.: H02P 9/00, H02P 9/48, F03D 7/02

(54) **Arrangement for generating a control signal for controlling an acceleration of a generator**
Anordnung zur Erzeugung eines Steuersignals zur Steuerung der Beschleunigung eines Generators
Agencement de génération d'un signal de commande pour contrôler l'accélération d'un générateur

(43) Date of publication of application: 13.02.2013
(73) Proprietor: Siemens Aktiengesellschaft, 80333 München (DE)
(72) Inventor: Andresen, Björn, 8752 Ostbirk (DK); Kumar, Sathees, 7400 Herning (DK)

(56) References cited:
- EP-A1- 2 075 890
- WO-A1-2005/067119
- US-A1- 2009 167 021
- US-A1- 2010 140 939
- US-A1- 2011 031 748

## Description

### Field of invention

The present invention relates to an arrangement for controlling a power output of a power generation system by controlling an acceleration of a generator of the power generation system, in particular of a wind turbine. Further, the present invention relates to a power generation system including the arrangement. Moreover, the present invention relates to a method for controlling a power output of a power generation system by controlling an acceleration of a generator of the power generation system. Beyond this, the present invention relates to a computer program for controlling a power output of a power generation system by controlling an acceleration of a generator of the power generation system.

### Art Background

One or more power generation systems, such as wind turbines, may be connected to a utility grid to supply electric energy to the utility grid. On the other hand, one or more consumers or loads are connected to the utility grid to extract electric energy from the utility grid. The utility grid may deliver the electric energy in form of a AC power stream (or signal or electromagnetic wave) which have a predetermined nominal grid frequency, such as 50 Hz or 60 Hz. Thereby, the grid frequency may highly depend on the balance of generated and consumed power. This balance of generated and consumed power is necessary to keep the frequency stable, but due to outage, generation loss and sudden increase in power a variation in frequency is often observed.

Conventional power plants increase production of active power when the frequency falls below a certain limit, and conversely reduce the power production when having over frequency event. Loss of big user groups consuming power in the MW range, is likely to result in an over frequency event where the electrical frequency goes above rated frequency for a while before it settles back. When an over frequency event occurs, the power sent to the utility grid will be lowered. In conventional systems, the generator will be reduced in speed when lowering the power sent to the utility grid. But, as, for example in the case of wind turbines, the wind is blowing all the time and if the same wind passes the wind turbine, there will be still an access power. That means that input power (for example from the wind) is greater than the output from the power generation system. When input power is greater than output, then the generator would normally (that means in normal operation mode, without an over frequency event) start to accelerate.

US 2011/031748 A1 discloses a wind turbine generator including a rotor that rotates by wind power, a generator that is driven by rotation of the rotor, and a control device that controls a power output of the generator to increase while a rotational speed of the generator decreases when a frequency of a utility grid becomes smaller than or equal to a predetermined rated frequency and when the rotational speed of the generator is greater than or equal to a first predetermined value. The control device includes a converter control unit, a pitch control unit, and a main control unit. The main control unit calculates the power output to the utility grid on the basis of the output current Igrid and the voltage Vgrid, which are outputs of a sensor. The main control unit generates control signals for the converter control unit and the pitch control unit in response to the rotational speed. To increase the power output, for example, the pitch angle of the blades is controlled by the pitch control unit so as to be set to "fine", on the basis of a control signal from the main control unit. The generator torque is increased by controlling the inverter device with the converter control unit on the basis of a control signal from the main control unit to convert and collect inertial energy of the wind-turbine rotor to power output. The pitch control unit and the converter control unit control the blades and the inverter device, respectively, so as to maintain the rated power when power output of the wind turbine generator increases and reaches the rated power.

US 2010/140939 A1 discloses a power system for a wind turbine having a measurement device configured to detect a so called overfrequency condition within an electrical system and a controller communicatively coupled to the measurement device. The controller is configured to switch the wind turbine between a power generation mode and a power consumption mode based on an existence of a detected overfrequency condition. For instance, if an overfrequency condition is detected, a controller transmits one or more pitch commands to a pitch system that rotates one or more blades of a wind turbine to a predefined controlled position. The pitch system is operatively coupled to at least one blade. The pitch system rotates, or pitches, blades to a desired position in response to one or more pitch commands transmitted by turbine controller. The pitch system facilitates controlling a rotational speed of rotor by adjusting an amount of torque induced to blades by wind. If an overfrequency condition occurs, turbine controller transmits one or more pitch commands that direct pitch system to pitch blades to a controlled position, such as a feathered position or any suitable position, to prevent rotor from exceeding a rated speed.

US 2009/167021 A1 discloses a method of operating a wind power installation connected to a network for distribution of electrical power. The wind power installation comprises at least one wind power generator. The wind power installation is related to the network for injection of power into the network. The network has a nominal network frequency (fn) (for example, 50 Hz) and the network is arranged for operating at the nominal network frequency.

WO 2005/067119 A1 discloses a wind farm with at least two wind turbines connected to a power grid is provided. The wind farm further comprises a control unit connected to the at least two wind turbines and a sensor unit connected to the power grid and the control unit. The sensor unit is adapted to measure the grid frequency of the power grid and to transmit the measured grid frequency to the control unit. The control unit is adapted to control the output of real power of the wind farm according to the measured grid frequency.

EP 2 075 890 A1 discloses the possibility of lowering the grid frequency of a power supply grid by lowering the amount of electrical power provided to the power supply grid. This electrical power is reduced by an amount of power absorbed in a power reservoir while the pitch regulated wind turbine is kept at maximal power production.

There may be a need for an arrangement for controlling a power output of a power generation system by controlling an acceleration of a generator of the power generation system and for a power generation system which provides improved control in case of frequency oscillations of the utility grid.

### Summary of the Invention

This need may be met by the subject matter according to the independent claims. Advantageous embodiments of the present invention are described by the dependent claims.

According to an embodiment, an arrangement for controlling a power output of a power generation system by controlling an acceleration of a generator of the power generation system, in particular a wind turbine, is provided. The arrangement comprises an input terminal for receiving an input signal indicative of an actual grid frequency of a utility grid, a control circuit for generating a control signal, and an output terminal to which the control signal is supplied. The control circuit is adapted for receiving the input signal, for determining whether the actual grid frequency is above a predefined threshold, and, if the input signal indicates that the actual grid frequency is above the predefined threshold, (a) for generating the control signal based on the input signal and (b) for controlling the power generation system such that the power output to the utility grid is reduced. The control signal is indicative of an acceleration of the generator and the power output of the power generation system is controlled by controlling the acceleration of the generator based on the control signal.

The term "input/output terminal" may denote an electrical input/output terminal or an input/output node. The term "input signal" may denote an electrical signal, such as an analogue signal or a digital signal. The term "actual grid frequency" may denote a momentary frequency of the utility grid, in particular comprising one or more values, in particular at different time points, of the frequency, wherein the one or more values may indicative of a time course of the actual frequency of the utility grid. The term "utility grid" may denote a grid to which the power generation system supplies energy and from which one or more consumers extract electrical energy. The term "acceleration of the generator" may also refer to the acceleration of the rotor, depending on the arrangement of rotor and generator.

The control circuit may comprise in particular one or more integrated circuits, and/or a computer, a computer program being executed on the computer for generating the control signal, which may be in particular an electrical control signal, such as an analogue signal or a digital signal. The input signal may be continuously measured or measured at a number of sample points being spaced in time relative from each other.

The arrangement may be used to avert over frequency events in the grid. Loss of big user group consuming power is likely to result in an over frequency event where the electrical frequency goes above rated frequency for a while before it settles back.

When an over frequency event occurs, the set points sent to the turbines might be lowered as not too much power should be generated and delivered into the grid. Therefore the power demand will change for instance from 100% to 80%.

But as for example the wind or any other power source is present, for example blowing, all the time and if the same wind passes the wind turbine there will be an access power. That means that input power (for example from the wind) is greater than then the output from the (wind) turbine (because of the reduced power output). When the input power is greater than the output power, then the generator will start to accelerate.

In conventional systems, the following sequence takes place during an over frequency event. First, the frequency rises, in response to that, active power is ramped down abruptly. Then, the generator speed increases (accelerates). Subsequently, pitch activity is started to obtain nominal speed of the generator. This means that the generator speed accelerates for a short time, and because of pitching out, the generator speed consequently drops.

As the input power (for example wind) is still present and such an over frequency event normally takes only a short time, the generator speed should not be reduced during such a situation. By accelerating the generator, the (normally) short over frequency event may be bridged as the input power of the wind may be averted by the acceleration of the generator. Further, when the over frequency event is over, the generator may return to normal operation without complex re-pitching of the blades of the turbine. Further, the input power, which is greater than the power needed during an over frequency event, will be eliminated or "burned" by accelerating the generator.

According to an embodiment, the wind turbine may be equipped with a full-scale converter, effectively decoupling the rotor side from the grid. In particular, the wind turbine may comprise a tower, a nacelle mounted on top of the tower, and a rotor rotatably supported within the shaft, wherein at the rotor one or more rotor blades are mounted. The rotor shaft may mechanically be coupled to a generator for generating electric energy when the rotor shaft rotates due to wind impacting on the rotor blades.

In particular, the generator of the wind turbine may generate variable frequency AC power signals (or a AC power stream) which may be supplied to the full-scale converter. The full-scale converter may first convert the variable frequency power signal to a DC power signal and may then convert the DC power signal to a fixed frequency power signal having the frequency of the utility grid under normal conditions, i.e. the nominal grid frequency. In particular, the converter may be capable of controlling a power output of the wind turbine, in particular may be adapted for decoupling the inertia of the rotor from the grid. In particular, the grid may not have a direct link to the inertia of the revolving mass of the rotor.

The arrangement may be arranged at turbine level or at the wind farm park pilot level. This means that the arrangement may be separated from the power control for normal operation. In accordance with the invention, the control circuit is further adapted to disable a pitch controller of the power generation system if the input signal indicates that the actual grid frequency is above the predefined threshold in order to not influence the acceleration of the rotor.

Such a pitch controller may be normally used to adjust the pitch angle of the blades, for example when the input power (wind) increases. During an over frequency event, the pitch activity may be "locked" by the control circuit in order to accelerate the generator speed rather than control it towards nominal rpm (revolutions per minute) which is the main objective of the pitch controller. By the arrangement, the pitch controller may be bypassed during an over frequency event and the generator rpm may be kept accelerated.

According to a further embodiment, the control circuit is adapted to generate the control signal based on the actual grid frequency and a further input signal being indicative of a mechanical input power to the generator.

Mechanical input powers may be for example wind or water. The control signal is based on the actual grid frequency as well as on the mechanical input power to avoid an acceleration of the generator, in case of when the mechanical input power is increased instead of the case of an over frequency event.

According to a further embodiment, the control circuit comprises an over frequency controller for generating a further control signal for controlling a power output of the power generation system, wherein the power output is supplied to a utility grid, wherein the over frequency controller is adapted to generate a further control signal for decreasing the power output of the power generation system.

The control of the power output as performed by the described arrangement may be discontinuous, which means that a certain statement (exceeding the predefined threshold) must be fulfilled in order to initiate the generation of the inertia response. The control may be based on a fixed frequency activation threshold and a fixed delta P regulation. Both values may be determined before in a control strategy, for example during design of the power generation system.

In particular, the control signal may be generated to cause a decrease of active power output of the power generation system, when the actual grid frequency exceeds a certain limit.

The further control signal may also be denoted as inertia response signal in the context of the present application. In particular, the further control signal may be supplied to a wind turbine controller which in turn generates based on the control signal a power reference signal to be supplied to a converter of the wind turbine for controlling a power output of the converter (and thus of the wind turbine) depending on the power reference signal.

According to a further embodiment, the over frequency controller is adapted to generate the further control signal based on the actual grid frequency.

The control of the power output may depend on the same input signal as the acceleration of the generator. By using the actual grid frequency, a dynamic adaptation of the power output may be provided.

According to a further embodiment, the further control signal is indicative of a predefined amount of power.

The frequency may be measured and fed to the over frequency controller. The controller may comprise filters and controllers which creates the DeltaP. DeltaP is the amount of power the power should be reduced. DeltaP may be sent to the wind turbine where it may be added to the original power reference.

For example, if the wind turbine is producing a rated power (1 pu) and the frequency rises. This may result in a DeltaP of 0.2 pu. The power reference sent to the converter would then be 1 - 0.2 = 0.8 pu.

Before injecting the power into the electrical grid, the power may be converted into an active current.

According to a further embodiment, the over frequency controller is adapted to generate the further control signal by using a data base, wherein a plurality of values of predefined amounts of power are stored in the storage in association with a plurality of values of grid frequencies.

The data base may be any kind of storage being able to store values. The data base may be for example a lookup table. By using such a data base, a fast dynamic frequency response may be provided as such the data base may give a response according to the frequency variation without complex calculations.

In a further embodiment, the over frequency controller is adapted to generate the further control signal by using a predefined function which gives a frequency response.

According to a further embodiment, the arrangement is adapted to communicate with a power generation plant controller (such as a wind farm controller HPPP) controlling a plurality of power generation systems, including the power generation system, regarding their power outputs (such that the power generation plant controller in a normal operation transmits control signals to the power generation systems to control their power output), wherein in particular the further control signal is communicated to the power generation plant controller. Thereby, it is enabled that the power generation plant controller may take the further control signal into account which may prevent the power generation plant controller to counteract.

According to an embodiment, the arrangement further comprises a load determination unit (in particular comprising measurement equipment, a computer and/or a computer program running on the computer) for determining, (a) based on the further control signal and/or (b) based on both a power output and a nominal power output of the power generation system, a load (in particular a mechanical load and/or an electrical load) of the power generation system (the load for example comprising a load in a gear or a bearing of the rotor shaft), wherein in particular the load determination unit comprises a counter for counting a number of times the further control signal caused a decrease of the power output of the power generation system (or wherein the counter is also adapted for measuring a time interval or a plurality of time intervals the control signal caused a decrease of the power output of the power generation system), in particular for counting a number of times the further control signal caused a decrease of the power output of the power generation system above the nominal power output (wherein in particular the counter is also adapted for measuring a time interval or a plurality of time intervals the control signal caused a decrease of the power output of the power generation system above the nominal power output, wherein the nominal power output may also be referred to as rated power output defining a power output during normal continuous operation of the power generation system).

In particular, the load determination unit may allow to estimate or measure an accumulated load the power production system or wind turbine system is subjected to. Further, the load determination unit may allow estimation or measuring of an expected lifetime of the power generation system, in particular the wind turbine. Further, the measurements or estimations of the load determination unit may be taken into account for generating the further control signal. Thus, the further control signal may be generated also to be based on a load determined by the load determination unit. Thereby, the control of the power generation system regarding its power output may be improved.

According to a further embodiment, the input signal is indicative of a deviation of the actual grid frequency from a fixed nominal grid frequency, wherein the arrangement in particular comprises a comparator for determining the frequency deviation of the actual grid frequency from the fixed nominal grid frequency.

According to an embodiment, the input signal is indicative of a deviation of the actual grid frequency from a fixed nominal grid frequency, wherein the arrangement may comprise a comparator such as a logic circuit for determining the frequency deviation of the actual grid frequency from the fixed nominal grid frequency. Including a comparator for determining the frequency deviation may allow generating the control signal based on the frequency deviation. This in particular may allow inclusion of further control elements into the arrangement which are sensitive to the absolute value of the input signal.

According to a further embodiment, the control circuit is further adapted to latch the rotational speed of the generator if the actual grid frequency is above a predefined threshold.

The generator rpm may be latched during over frequency events. This mode may be for example activated during design of the wind turbine.

According to a further embodiment, a power generation system, in particular wind turbine system, for supplying electrical power to a utility grid, is provided. The power generation system comprises an arrangement as described above for controlling a power output of a power generation system by controlling an acceleration of a generator of the power generation system, and a generator arranged to receive the control signal (or a signal generated based on the control signal, e.g. using a further wind turbine controller) and to adapt the acceleration in dependence of the control signal.

In particular, the control signal may be used by the generator to trigger conducting states of one or more semiconductor switches, such as IGBTs, which control the acceleration.

It should be understood that features (individually or in any combination) disclosed, described, used for or mentioned in respect to the description of an embodiment of an arrangement for controlling a power output of a power generation system by controlling an acceleration of a generator of the power generation system may also be (individually or in any combnation) applied, used for, or employed for a method for controlling a power output of a power generation system by controlling an acceleration of a generator of the power generation system.

According to a further embodiment, a method for controlling a power output of a power generation system by controlling an acceleration of a generator of the power generation system, in particular a wind turbine, is provided. The method comprises receiving, by an input terminal, an input signal indicative of an actual grid frequency of a utility grid, generating, by a control circuit, a control signal, and supplying the control signal to an output terminal. The method further comprises receiving, by the control circuit, the input signal, determining, by the control circuit, whether the actual grid frequency is above a predefined threshold, and, if the input signal indicates that the actual grid frequency is above the predefined threshold, (a) generating, by the control circuit, the control signal based on the input signal and (b) controlling the power generation system such that the power output to the utility grid is reduced, wherein the control signal is indicative of an acceleration of the generator, and wherein the power output of the power generation system is controlled by controlling the acceleration of the generator based on the control signal. The provided method further comprises disabling, by the control circuit, a pitch controller of the power generation system if the input signal indicates that the actual grid frequency is above the predefined threshold in order to not influence the acceleration of the rotor.

According to a further aspect of the invention, there is pyrovided a computer program for controlling a power output of a power generation system by controlling an acceleration of a generator of the power generation system. The computer program, when being executed by a data processor, is adapted for controlling the method as described above.

As used herein, reference to a computer program is intended to be equivalent to a reference to a program element containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

According to a further aspect of the invention there is provided a computer-readable medium (for instance a CD, a DVD, a USB stick, a floppy disk or a hard disk), in which a computer program for controlling a power output of a power generation system by controlling an acceleration of a generator of the power generation system is stored, which computer program, when being executed by a processor, is adapted to carry out or control a method for controlling a power output of a power generation system by controlling an acceleration of a generator of the power generation system.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings to which the invention is not limited.
Fig. 1 illustrates an arrangement for controlling a power output of a power generation system by controlling an acceleration of a generator of the power generation system according to an embodiment;
Fig. 2 illustrates the nominal frequency during an over frequency event;
Fig. 3 illustrates the nominal power during an over frequency event;
Fig. 4 illustrates the generator speed during an over frequency event according to an embodiment;
Fig. 5 illustrates an over frequency control scheme according to an embodiment;
Fig. 6 illustrates a dynamic frequency response according to an embodiment;
Fig. 7 schematically illustrates a park layout of a wind farm.

### Detailed Description

The illustration in the drawings is in schematic form. It is noted that in different figures, similar or identical elements are provided with the same reference signs.

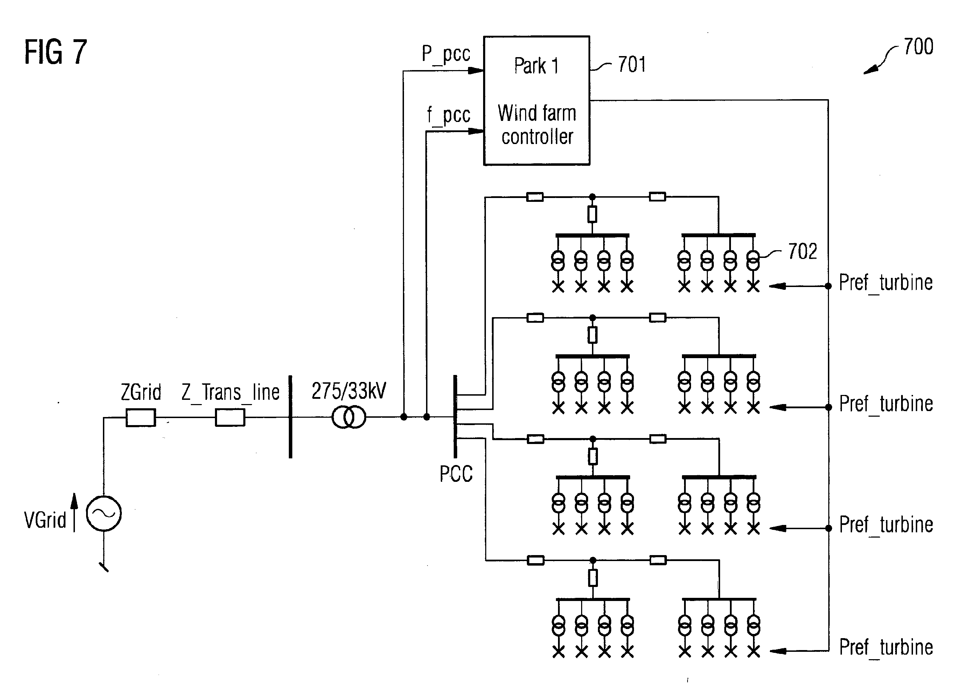

In Fig. 7, a common park layout of a wind farm 700 is shown. In this wind farm, the frequency control is controlled on park level. That means that the grid frequency is monitored at the Point Of Common Coupling (PCC) and an active power production is controlled by the wind farm controller 701. Decrease or increase of active power depends on the droop characteristic parameter in the wind farm controller. The actual frequency f_pcc and the actual power P pcc measured at the PCC are provided to the wind farm controller 701. The controller is adapted to send a control signal Pref_turbine to each wind turbine 702. The wind turbines will then change the production of active power in accordance with the control signal, i.e. increase the production when the frequency falls below a certain limit and reduce the power production if the frequency rises above a certain limit.

The wind farm in Fig. 7 has one PCC point. The frequency is measured at this point and sent to the wind farm controller. The wind farm controller is taking the frequency measurement from PCC and corresponding active power references are distributed to the wind turbines. If the frequency is too low the reference power Pref_turbine send to the turbines will increase, while the reference power Pref_turbine is reduced if the frequency is too high.

The grid frequency highly depends on the balance of generated and consumed power. This equality is necessary to keep the frequency stable, but due to outage, generation loss and sudden increase in power a variation in frequency is seen. Ordinary power plants increase production of active power when the frequency falls below a certain limit, and conversely reduce the power production when having over frequency event.

Ordinary power plants are to be replaced by large scale wind farm within the coming decades which sets new requirement for wind power plant. The majority of wind farms today operate with a full-scale converter, effectively decoupling the rotor side from the grid. This decoupling results in that the grid doesn't have a direct link to the Inertia of the revolving mass.

A further issue is over frequency events in the grid. Loss of big user groups consuming power in the MW range, is likely to result in an over frequency event where the electrical frequency goes above rated frequency for a while before it settles back.

The frequency control has so far been controlled on park level, meaning the grid frequency at Point Of Common Coupling is monitored and active power production is controlled by the wind farm controller. The decrease or increase of active power depends on the droop characteristic parameter in the wind farm controller.

A description of an exemplary frequency control is shown in Fig. 7 as explained above. The wind farm in this example has one PCC point. The frequency is measured at this point and sent to the wind farm controller. The wind farm controller is taking the frequency measurement from PCC and corresponding active power references are distributed to the wind turbines. If the frequency is too low the reference power Pref_turbine send to the turbines will increase,while the reference power Pref_turbine is reduced if the frequency is too high.

The wind farm controller will adjust for example according to two different modes, frequency limited mode (LFSM) and frequency sensitive mode (FSM). The LFSM only reacts on frequency increase above 50.4 [Hz] while FSM reacts on both frequency fall and rise. The slope dP/df is defined by the droop factor which determines the amount of active power increase or decrease due to grid frequency changes. The FSM might only be activated when the wind turbine is down regulated.

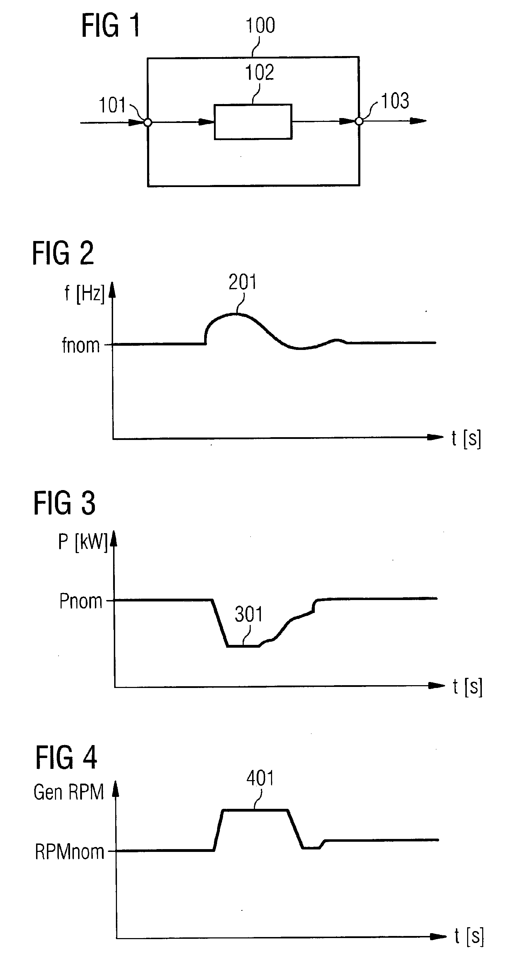

During an over frequency event, for example due to loss of big user groups consuming power, the frequency will rise (see 201 in Fig. 2). The active power or nominal power will then be ramped down abruptly (see 301 in Fig. 3).

In conventional systems, the generator speed would accelerate, subsequently the pitch controller would regulate the pitch angle and therefore, the generator speed would be reduced again.

To avoid the reducing of the generator speed, an arrangement 100 is provided. As shown in Fig. 1, the arrangement 100 is adapted to control a power output of a power generation system by controlling an acceleration of a generator of the power generation system, in particular a wind turbine. The arrangement comprises an input terminal 101 for receiving an input signal indicative of an actual grid frequency of a utility grid. A control circuit 102 determines whether the actual grid frequency is above a predefined threshold, i.e. if there is an over frequency event, and, if the input signal indicates that the actual grid frequency is above the predefined threshold, generates the control signal based on the input signal. The control signal is indicative of an acceleration of the generator. This means that the generator might be accelerated based on this signal or that the pitch controller might be locked to not influence the acceleration of the generator. Thus, the power output of the power generation system is controlled by controlling the acceleration of the generator. The control circuit outputs the control signal to an output terminal 103.

By using the arrangement as shown in Fig. 1, the generator speed will be accelerated as shown in Fig. 4. The curve 401 shows that the generator is accelerated and that the speed is reduced when the over frequency event is ended.

The control circuit may further be adapted to determine whether the actual grid frequency has fallen again below the predefined threshold and may then stop to control the acceleration of the generator or may send a control signal to stop the acceleration and to return to normal operation.

When the described arrangement is used, the pitch activity may be locked during an over frequency event in order to accelerate the generator speed rather than control it towards nominal rpm which is the main objective of the pitch controller. The idea is to bypass the pitch controller during an over frequency event and keep accelerating the generator rpm. Another mode may be implemented in an over frequency controller, which makes sure to latch the generator rpm during over frequency events. This mode might be only active if the over frequency functionality is purchased by the customer.

The arrangement 100 may be further comprise an over frequency control 500 comprising an over frequency controller 505. The frequency 504 is measured and fed to the over frequency controller comprising filters and controllers which creates the DeltaP 506. DeltaP is the amount the power should be reduced. DeltaP is sent to the wind turbine controller 507, where it is added to the original power reference. Say that the wind turbine is producing is rated power (1 pu) and the frequency rise. This will result in a DeltaP of for example 0.2 pu. The power reference 508 would then be sent to a converter 509. The power reference would then be 1 - 0.2 = 0.8 pu. In the converter, the power is converted into an active current 510 before injected into the electrical grid 511. The electrical grid provides then voltage 512 for example to a terminator 513.

The arrangement as described herein may provide the following features: A fast response during over frequency events; a control system which lets the rotor and generator accelerate during an over frequency event rather controlling the speed towards nominal speed; a control system which detects the frequency, and when the frequency exceeds a certain threshold value the power is ramped down much faster than it is today, as a fast response is desired, a counter system which logs how many over frequency events occurred; a system being located at wind farm level (in the wind farm controller) (alternatively, the implemented system may be placed on wind turbine level (in the wind turbine controller); a FLM with dynamic response characteristic.

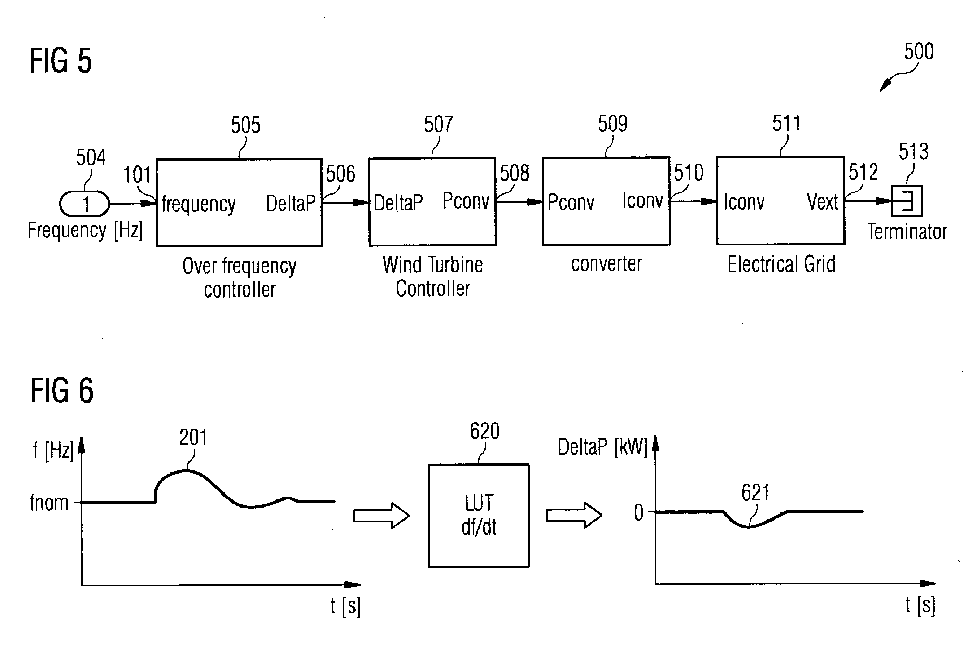

Beside the over frequency controller, the arrangement 100 may provide a dynamic frequency response as shown in Fig. 6. In common systems, a static response is used. According to an embodiment, a data base, for example a lookup table 620, may be used which give a response according to the frequency variation or a predefined function which gives a desired response.

The DeltaP response - the amount the power should be reduced during anover frequency event - is shown in Fig. 6. The Lookup Table (LUT) takes the actual frequency 201 as input and gives the corresponding power 621 as output. The DeltaP signal is added to the original reference and sent to the Wind turbine which will reduce the power. The LUT may be for example the derivative of the frequency or some other characteristic.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. An arrangement (100) for controlling a power output of a power generation system by controlling an acceleration of a generator of the power generation system, in particular a wind turbine, the arrangement comprising
an input terminal (101) for receiving an input signal indicative of an actual grid frequency of a utility grid;
a control circuit (102) for generating a control signal; and
an output terminal (103) to which the control signal is supplied;
wherein the control circuit is adapted
for receiving the input signal,
for determining whether the actual grid frequency is above a predefined threshold, and
if the input signal indicates that the actual grid frequency is above the predefined threshold, (a) for generating the control signal based on the input signal and (b) for controlling the power generation system such that the power output to the utility grid is reduced,
wherein the control signal is indicative of an acceleration of the generator, and
wherein the power output of the power generation system is controlled by controlling the acceleration of the generator based on the control signal,
**characterized in that** the control circuit (102) is further adapted to disable a pitch controller of the power generation system to loch the pitch activity if the input signal indicates that the actual grid frequency is above the predefined threshold in order to not influence the acceleration of the rotor.

2. The arrangement (100) according to any one of the preceding claims,
wherein the control circuit (102) is adapted to generate the control signal based on the actual grid frequency and a further input signal being indicative of a mechanical input power to the generator.

3. The arrangement (100) according to any one of the preceding claims,
wherein the control circuit (102) comprises an over frequency controller (505) for generating a further control signal (506) for controlling a power output of the power generation system, wherein the power output is supplied to a utility grid, wherein the over frequency controller is adapted to generate a further control signal for decreasing the power output of the power generation system.

4. The arrangement (100) according to claims 3,
wherein the over frequency controller (505) is adapted to generate the further control signal based on the actual grid frequency.

5. The arrangement (100) according to any one of the claims 3 and 4 ,
wherein the further control signal (506) is indicative of a predefined amount of power.

6. The arrangement (100) according to claim 5,
wherein the over frequency controller (505) is adapted to generate the further control signal (506) by using a data base, wherein a plurality of values of predefined amounts of power are stored in the storage in association with a plurality of values of grid frequencies.

7. The arrangement (100) according to any one of the claims 3 to 6, wherein the arrangement is adapted to communicate with a power generation plant controller controlling a plurality of power generation systems, including the power generation system, regarding their power outputs, wherein in particular the further control signal is communicated to the power generation plant controller.

8. The arrangement (100) according to any one of the claims 3 to 7, further comprising
a load determination unit for determining, based on the further control signal and/or based on both a power output and a nominal power output of the power generation system, a load of the power generation system,
wherein in particular the load determination unit comprises a counter for counting a number of times the further control signal caused a decrease of the power output of the power generation system,
in particular for counting a number of times the further control signal caused a decrease of the power output of the power generation system below the nominal power output.

9. The arrangement (100) according to any one of the preceding claims,
wherein the input signal is indicative of a deviation of the actual grid frequency from a fixed nominal grid frequency, wherein the arrangement in particular comprises a comparator for determining the frequency deviation of the actual grid frequency from the fixed nominal grid frequency.

10. The arrangement (100) according to any one of the preceding claims,
wherein the control circuit (102) is further adapted to latch the rotational speed of the generator if the actual grid frequency is above a predefined threshold.

11. A power generation system, in particular wind turbine system, for supplying electrical power to a utility grid, the power generation system comprising:
an arrangement (100) according to any one of the preceding claims for controlling a power output of a power generation system by controlling an acceleration of a generator of the power generation system; and
a generator arranged to receive the control signal and to adapt the acceleration in dependence of the control signal.

12. A method for controlling a power output of a power generation system by controlling an acceleration of a generator of a power generation system, in particular a wind turbine, the method comprising:
receiving, by an input terminal, an input signal indicative of an actual grid frequency of a utility grid;
generating, by a control circuit, a control signal; and
supplying the control signal to an output terminal;
the method further comprising,
receiving, by the control circuit, the input signal,
determining, by the control circuit, whether the actual grid frequency is above a predefined threshold, and
if the input signal indicates that the actual grid frequency is above the predefined threshold, (a) generacting, by the control circuit, the control signal based on the input signal and (b) controlling the power generation system such that the power output to the utility grid is reduced,
wherein the control signal is indicative of an acceleration of the generator, and
wherein the power output of the power generation system is controlled by controlling the acceleration of the generator based an the control signal,
**characterized in that** the method further comprises disabling, by the control circuit, a pitch controller of the power generation system to loch a pitch activity if the input signal indicates that the actual grid frequency is above the predefined threshold in order to not influence the acceleration of the rotor.

13. A computer program for generating a control signal for controlling an acceleration of a generator of a power generation system, the computer program, when being executed by a data processor, is adapted for controlling the method as set forth in claim 12.

## Patentansprüche

1. Anordnung (100) zur Steuerung einer Leistungsabgabe eines Stromerzeugungssystems durch Steuerung einer Beschleunigung eines Generators des Stromerzeugungssystems, insbesondere einer Windenergieanlage, wobei die Anordnung umfasst:
eine Eingangsklemme (101) zum Empfangen eines Eingangssignals, das für eine Ist-Netzfrequenz eines Versorgungsnetzes indikativ ist;
eine Steuerschaltung (102) zum Erzeugen eines Steuersignals; und
eine Ausgangsklemme (103), welcher das Steuersignal zugeführt wird;
wobei die Steuerschaltung dazu eingerichtet ist,
das Eingangssignal zu empfangen,
zu bestimmen, ob die Ist-Netzfrequenz über einem vordefinierten Schwellenwert liegt, und
falls das Eingangssignal anzeigt, dass die Ist-Netzfrequenz über dem vordefinierten Schwellenwert liegt, (a) das Steuersignal auf der Basis des Eingangssignals zu erzeugen und (b) das Stromerzeugungssystem derart zu steuern, dass die Leistungsabgabe an das Versorgungsnetz verringert wird,
wobei das Steuersignal für eine Beschleunigung des Generators indikativ ist, und
wobei die Leistungsabgabe des Stromerzeugungssystems durch Steuerung der Beschleunigung des Generators auf der Basis des Steuersignals gesteuert wird,
**dadurch gekennzeichnet, dass** die Steuerschaltung (102) ferner dazu eingerichtet ist, einen Pitch-Regler des Stromerzeugungssystems zu deaktivieren, um die Pitch-Aktivität zu sperren, falls das Eingangssignal anzeigt, dass die Ist-Netzfrequenz über dem vordefinierten Schwellenwert liegt, um die Beschleunigung des Rotors nicht zu beeinflussen.

2. Anordnung (100) nach einem der vorhergehenden Ansprüche, wobei die Steuerschaltung (102) dazu eingerichtet ist, das Steuersignal auf der Basis der Ist-Netzfrequenz und eines weiteren Eingangssignals, das für eine dem Generator zugeführte mechanische Leistung indikativ ist, zu erzeugen.

3. Anordnung (100) nach einem der vorhergehenden Ansprüche, wobei die Steuerschaltung (102) eine Überfrequenz-Steuereinrichtung (505) zum Erzeugen eines weiteren Steuersignals (506) zur Steuerung einer Leistungsabgabe des Stromerzeugungssystems umfasst, wobei die Leistungsabgabe an ein Versorgungsnetz erfolgt, wobei die Überfrequenz-Steuereinrichtung dazu eingerichtet ist, ein weiteres Steuersignal zur Verringerung der Leistungsabgabe des Stromerzeugungssystems zu erzeugen.

4. Anordnung (100) nach Anspruch 3,
wobei die Überfrequenz-Steuereinrichtung (505) dazu eingerichtet ist, das weitere Steuersignal auf der Basis der Ist-Netzfrequenz zu erzeugen.

5. Anordnung (100) nach einem der Ansprüche 3 und 4,
wobei das weitere Steuersignal (506) für eine vordefinierte Leistungsmenge indikativ ist.

6. Anordnung (100) nach Anspruch 5,
wobei die Überfrequenz-Steuereinrichtung (505) dazu eingerichtet ist, das weitere Steuersignal (506) unter Verwendung einer Datenbank zu erzeugen, wobei eine Vielzahl von Werten von vordefinierten Leistungsmengen in Verbindung mit einer Vielzahl von Werten von Netzfrequenzen in dem Speicher gespeichert ist.

7. Anordnung (100) nach einem der Ansprüche 3 bis 6, wobei die Anordnung dazu eingerichtet ist, mit einer Stromerzeugungsanlagen-Steuereinrichtung zu kommunizieren, die eine Vielzahl von Stromerzeugungssystemen, darunter das Stromerzeugungssystem, hinsichtlich ihrer Leistungsabgaben steuert, wobei insbesondere das weitere Steuersignal der Stromerzeugungsanlagen-Steuereinrichtung übermittelt wird.

8. Anordnung (100) nach einem der Ansprüche 3 bis 7, welche ferner umfasst:
eine Lastbestimmungseinheit zum Bestimmen, auf der Basis des weiteren Steuersignals und/oder auf der Basis sowohl einer Leistungsabgabe als auch einer Nenn-Leistungsabgabe des Stromerzeugungssystems, einer Last des Stromerzeugungssystems, wobei insbesondere die Lastbestimmungseinheit einen Zähler zum Zählen, wie oft das weitere Steuersignal eine Verringerung der Leistungsabgabe des Stromerzeugungssystems verursacht hat, insbesondere zum Zählen, wie oft das weitere Steuersignal eine Verringerung der Leistungsabgabe des Stromerzeugungssystems bis unter die Nenn-Leistungsabgabe verursacht hat, umfasst.

9. Anordnung (100) nach einem der vorhergehenden Ansprüche,
wobei das Eingangssignal für eine Abweichung der Ist-Netzfrequenz von einer festgelegten Nenn-Netzfrequenz indikativ ist,
wobei die Anordnung insbesondere einen Komparator zum Bestimmen der Frequenzabweichung der Ist-Netzfrequenz von der festgelegten Nenn-Netzfrequenz umfasst.

10. Anordnung (100) nach einem der vorhergehenden Ansprüche,
wobei die Steuerschaltung (102) ferner dazu eingerichtet ist, die Drehzahl des Generators zu halten, falls die Ist-Netzfrequenz über einem vordefinierten Schwellenwert liegt.

11. Stromerzeugungssystem, insbesondere Windenergieanlagensystem, zum Zuführen elektrischer Leistung zu einem Versorgungsnetz, wobei das Stromerzeugungssystem umfasst:
eine Anordnung (100) nach einem der vorhergehenden Ansprüche zur Steuerung einer Leistungsabgabe eines Stromerzeugungssystems durch Steuerung einer Beschleunigung eines Generators des Stromerzeugungssystems; und
einen Generator, der dafür eingerichtet ist, das Steuersignal zu empfangen und die Beschleunigung in Abhängigkeit von dem Steuersignal anzupassen.

12. Verfahren zur Steuerung einer Leistungsabgabe eines Stromerzeugungssystems durch Steuerung einer Beschleunigung eines Generators des Stromerzeugungssystems, insbesondere einer Windenergieanlage, wobei das Verfahren umfasst:
Empfangen eines Eingangssignals, das für eine Ist-Netzfrequenz eines Versorgungsnetzes indikativ ist, durch eine Eingangsklemme;
Erzeugen eines Steuersignals durch eine Steuerschaltung; und
Zuführen des Steuersignals zu einer Ausgangsklemme;
wobei das Verfahren ferner umfasst:
Empfangen des Eingangssignals durch die Steuerschaltung,
Bestimmen, ob die Ist-Netzfrequenz über einem vordefinierten Schwellenwert liegt, durch die Steuerschaltung, und
falls das Eingangssignal anzeigt, dass die Ist-Netzfrequenz über dem vordefinierten Schwellenwert liegt, (a) Erzeugen des Steuersignals auf der Basis des Eingangssignals durch die Steuerschaltung und (b) Steuern des Stromerzeugungssystems derart, dass die Leistungsabgabe an das Versorgungsnetz verringert wird, wobei das Steuersignal für eine Beschleunigung des Generators indikativ ist, und
wobei die Leistungsabgabe des Stromerzeugungssystems durch Steuerung der Beschleunigung des Generators auf der Basis des Steuersignals gesteuert wird,
**dadurch gekennzeichnet, dass** das Verfahren ferner das Deaktivieren eines Pitch-Reglers des Stromerzeugungssystems, um die Pitch-Aktivität zu sperren, durch die Steuerschaltung umfasst, falls das Eingangssignal anzeigt, dass die Ist-Netzfrequenz über dem vordefinierten Schwellenwert liegt, um die Beschleunigung des Rotors nicht zu beeinflussen.

13. Computerprogramm zum Erzeugen eines Steuersignals zur Steuerung einer Beschleunigung eines Generators eines Stromerzeugungssystems, wobei das Computerprogramm, wenn es durch einen Datenprozessor ausgeführt wird, dazu eingerichtet ist, das in Anspruch 12 dargelegte Verfahren zu steuern.

## Revendications

1. Agencement (100) permettant de commander une sortie de puissance d'un système de génération de puissance en commandant une accélération d'un générateur du système de génération de puissance, en particulier une éolienne, l'agencement comprenant
une borne d'entrée (101) permettant de recevoir un signal d'entrée indicatif d'une fréquence de réseau actuelle d'un réseau électrique ;
un circuit de commande (102) permettant de générer un signal de commande ; et
une borne de sortie (103) à laquelle le signal de commande est délivré ;
dans lequel le circuit de commande est adapté
pour recevoir le signal d'entrée,
pour déterminer si la fréquence de réseau actuelle est supérieure ou non à un seuil prédéfini, et
si le signal d'entrée indique que la fréquence de réseau actuelle est supérieure au seuil prédéfini, (a) pour générer le signal de commande sur la base du signal d'entrée et (b) pour commander le système de génération de puissance de telle sorte que la sortie de puissance vers le réseau électrique est réduite,
dans lequel le signal de commande est indicatif d'une accélération du générateur, et
dans lequel la sortie de puissance du système de génération de puissance est commandée en commandant l'accélération du générateur sur la base du signal de commande,
**caractérisé en ce que** le circuit de commande (102) est en outre adapté pour désactiver un régulateur de calage du système de génération de puissance pour bloquer l'activité de calage si le signal d'entrée indique que la fréquence de réseau actuelle est supérieure au seuil prédéfini afin de ne pas influer sur l'accélération du rotor.

2. Agencement (100) selon l'une quelconque des revendications précédentes,
dans lequel le circuit de commande (102) est adapté pour générer le signal de commande sur la base de la fréquence de réseau actuelle et d'un autre signal d'entrée est indicatif d'une puissance d'entrée mécanique dans le générateur.

3. Agencement (100) selon l'une quelconque des revendications précédentes,
dans lequel le circuit de commande (102) comprend un régulateur de surfréquence (505) permettant de générer un autre signal de commande (506) permettant de commander une sortie de puissance du système de génération de puissance, dans lequel la sortie de puissance est délivrée à un réseau électrique, dans lequel le régulateur de surfréquence est adapté pour générer un autre signal de commande permettant de diminuer la sortie de puissance du système de génération de puissance.

4. Agencement (100) selon la revendication 3,
dans lequel le régulateur de surfréquence (505) est adapté pour générer l'autre signal de commande sur la base de la fréquence de réseau actuelle.

5. Agencement (100) selon l'une quelconque des revendications 3 et 4,
dans lequel l'autre signal de commande (506) est indicatif d'une quantité de puissance prédéfinie.

6. Agencement (100) selon la revendication 5,
dans lequel le régulateur de surfréquence (505) est adapté pour générer l'autre signal de commande (506) en utilisant une base de données, une pluralité de valeurs de quantités prédéfinies de puissance étant stockées dans le stockage en association avec une pluralité de valeurs de fréquences de réseau.

7. Agencement (100) selon l'une quelconque des revendications 3 à 6, dans lequel l'agencement est adapté pour communiquer avec un système de commande d'unité de génération de puissance commandant une pluralité de systèmes de génération de puissance, y compris le système de génération de puissance, s'agissant de leurs sorties de puissance, dans lequel en particulier l'autre signal de commande est communiqué au système de commande d'unité de génération de puissance.

8. Agencement (100) selon l'une quelconque des revendications 3 à 7, comprenant en outre
une unité de détermination de charge permettant de déterminer, sur la base de l'autre signal de commande et/ou sur la base à la fois d'une sortie de puissance et d'une sortie de puissance nominale du système de génération de puissance, une charge du système de génération de puissance, dans lequel en particulier l'unité de détermination de charge comprend un compteur permettant de comptabiliser un nombre de fois où l'autre signal de commande a provoqué une diminution de la sortie de puissance du système de génération de puissance,
permettant en particulier de comptabiliser un nombre de fois où l'autre signal de commande a provoqué une diminution de la sortie de puissance du système de génération de puissance en dessous de la sortie de puissance nominale.

9. Agencement (100) selon l'une quelconque des revendications précédentes,
dans lequel le signal d'entrée est indicatif d'un écart de la fréquence de réseau actuelle par rapport à une fréquence de réseau nominale fixe,
dans lequel l'agencement comprend en particulier un comparateur permettant de déterminer l'écart de fréquence de la fréquence de réseau actuelle par rapport à la fréquence de réseau nominale fixe.

10. Agencement (100) selon l'une quelconque des revendications précédentes,
dans lequel le circuit de commande (102) est en outre adapté pour bloquer la vitesse de rotation du générateur si la fréquence de réseau actuelle est supérieure à un seuil prédéfini.

11. Système de génération de puissance, en particulier un système d'éolienne, permettant de délivrer de l'électricité à un réseau électrique, le système de génération de puissance comprenant :
un agencement (100) selon l'une quelconque des revendications précédentes permettant de commander une sortie de puissance d'un système de génération de puissance en commandant une accélération d'un générateur du système de génération de puissance ; et
un générateur agencé pour recevoir le signal de commande et pour adapter l'accélération en fonction du signal de commande.

12. Procédé de commande d'une sortie de puissance d'un système de génération de puissance en commandant une accélération d'un générateur d'un système de génération de puissance, en particulier une éolienne, le procédé comprenant :
la réception, par une borne d'entrée, d'un signal d'entrée indicatif d'une fréquence de réseau actuelle d'un réseau électrique ;
la génération, par un circuit de commande, d'un signal de commande ; et
la délivrance du signal de commande à une borne de sortie ;
le procédé comprenant en outre,
la réception, par le circuit de commande, du signal de commande,
le fait de déterminer, par le circuit de commande, si la fréquence de réseau actuelle est ou n'est pas supérieure à un seuil prédéfini, et
si le signal d'entrée indique que la fréquence de réseau actuelle est supérieure au seuil prédéfini, (a) la génération, par le circuit de commande, du signal de commande sur la base du signal d'entrée et (b) la commande du système de génération de puissance de telle sorte que la sortie de puissance vers le réseau électrique est réduite,
dans lequel le signal de commande est indicatif d'une accélération du générateur, et
dans lequel la sortie de puissance du système de génération de puissance est commandée en commandant l'accélération du générateur sur la base du signal de commande,
**caractérisé en ce que** le procédé comprend en outre la désactivation, par le circuit de commande, d'un régulateur de calage du système de génération de puissance pour bloquer l'activité de calage si le signal d'entrée indique que la fréquence de réseau actuelle est supérieure au seuil prédéfini afin de ne pas influer sur l'accélération du rotor.

13. Programme informatique permettant de générer un signal de commande permettant de commander une accélération d'un générateur d'un système de génération de puissance, le programme informatique, lorsqu'il est exécuté par une unité de traitement de données, étant adapté pour commander le procédé selon la revendication 12.
